**Europäisches Patentamt**

**European Patent Office**

**Office européen des brevets**

(11) Numéro de publication : **0 470 035 A1**

# (12) DEMANDE DE BREVET EUROPEEN

(21) Numéro de dépôt : **91500084.8**

(51) Int. Cl.⁵ : **A01J 25/16**

(22) Date de dépôt : **31.07.91**

(30) Priorité : **02.08.90 ES 9002428**

(43) Date de publication de la demande :
**05.02.92 Bulletin 92/06**

(84) Etats contractants désignés :
**DE FR GB**

(71) Demandeur : **ALLIBERT, S.A.**
**Cami Reial, 8, Pol. Ind. Riera de Caldes**
**E-08184 Palau de Plegamans, Barcelona (ES)**

(72) Inventeur : **Vicente Lizon, José**
**Cami Reial, 8**
**E-08184 Palau de Plegamans, Barcelona (ES)**

(74) Mandataire : **Ponti Sales, Adelaida**
**Paseo de Gracia, 33**
**E-08007 Barcelona (ES)**

(54) **Bac pour le séchage et maturation de fromages et produits similaires.**

(57)     Il est moulé d'une seule pièce, et se caractérise en ce que le fond (1) est formé par une pluralité de barreaux (2) parallèles, dont les surfaces supérieure (3) et inférieure (3a) sont arrondies, et définissent les faces supérieure et inférieure du fond (1).

Une pluralité de prolongations verticales en manière de tour (5,6,7), occupant des positions intermédiaires et périmétraux par rapport à ce fond (1), s'avancent au-dessus de la face supérieure et sont écartées par des larges espaces de ventilation. Une frette (10) rattache les extrémités supérieures des tours périmétraux (6,7).

La frette (10) et quelques tours (5,6) ont des cavités et des saillies pour permettre que les bacs soient empilables et s'emboîtent deux à deux.

Il permet l'écartement et la ventilation des fromages.

**EP 0 470 035 A1**

FIG. 1

La présente invention concerne un bac pour le séchage et maturation de fromages et produits similaires, dont la configuration améliore ostensiblement les conditions des fromages qui y sont logés.

Le séchage et la maturation de fromages et produits similaires requiert qu'ils soient ménagés dans des récipients qui en garantissent une complète aération, ainsi que leur immobilisation, même si le récipient est soumis à des mouvements pour changer leur position, empêchant que les fromages puissent se toucher.

Conformément à ces besoins on a conçu le bac pour le séchage et maturation de fromages et produits similaires de l'invention.

Ce bac est du type comprenant un corps moulé d'une seule pièce. A partir de cette réalisation généralisée et connue, le bac se caractérise en ce que le fond est formé par une pluralité de barreaux parallèles, dont les surfaces supérieure et inférieure sont arrondies et définissent les faces supérieure et inférieure du fond du bac disposées selon deux plans parallèles. Une pluralité de prolongations verticales en manière d'une tour, occupant des positions intermédiaires et périmétraux par rapport à ce fond, s'avancent au-dessus de la face supérieure du fond, les sections transversaux de ces tours étant différentes en fonction de la situation des tours dans le fond. Les tours sont écartées par des larges espaces de ventilation. Le bac est complété par une frette qui rattache les extrémités supérieures des tours occupant la position périmétrale. Les extrémités supérieures d'au moins quelques tours sont pourvues de saillies et les extrémités inférieures de cavités complémentaires aux saillies, qui permettent emboîter plusieurs bacs entr'eux.

Les tours présentent des faces latéraux, qui leur donnent une configuration en manière d'un prisme, dont les faces constituent les zones qui délimitent la position des fromages.

La frette est pourvue de saillies, et le périmètre de la face inférieure du fond, d'enfoncements complémentaires aux saillies, qui centrent et immobilisent les bacs emboîtés.

De cette façon, les fromages sont aménagés dans des espaces individuels définis par les fonds de deux bacs contigus et par les tours, lesquelles écartent les fromages tout en laissant des larges espaces de ventilation.

Grâce aux bords arrondis des barreaux la surface de contact entre les fromages et le fond du bac est très réduite.

Pour mieux comprendre tout ce qui a été décrit dans ce mémoire on accompagne des dessins dans lesquels on représente, seulement à titre d'exemple, un cas pratique de réalisation du bac.

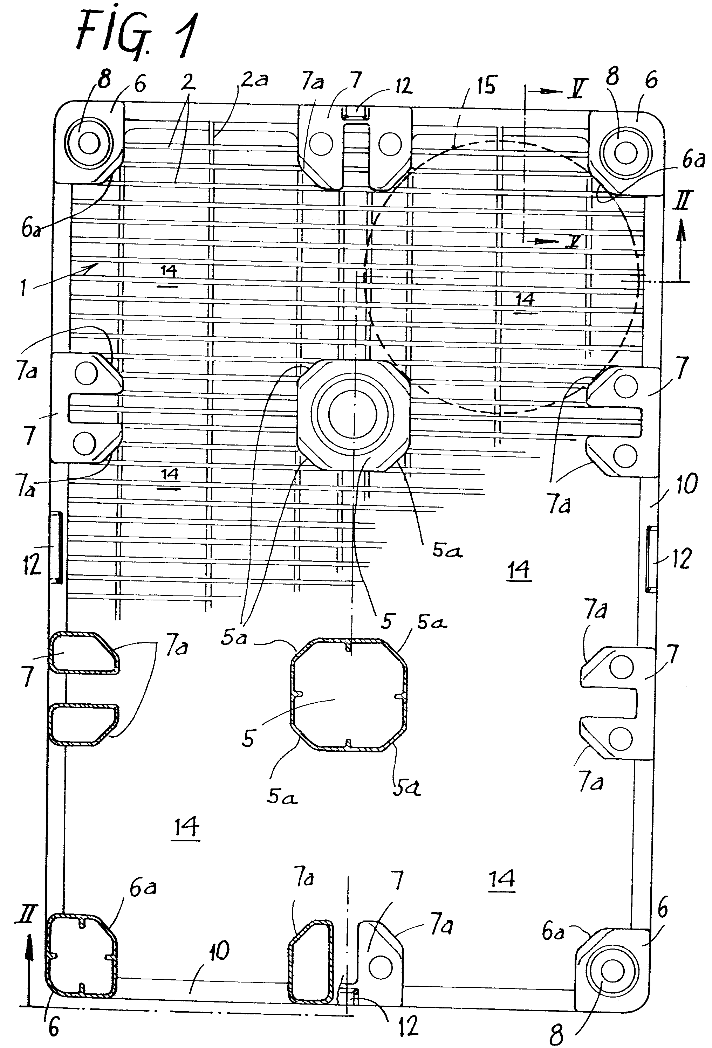

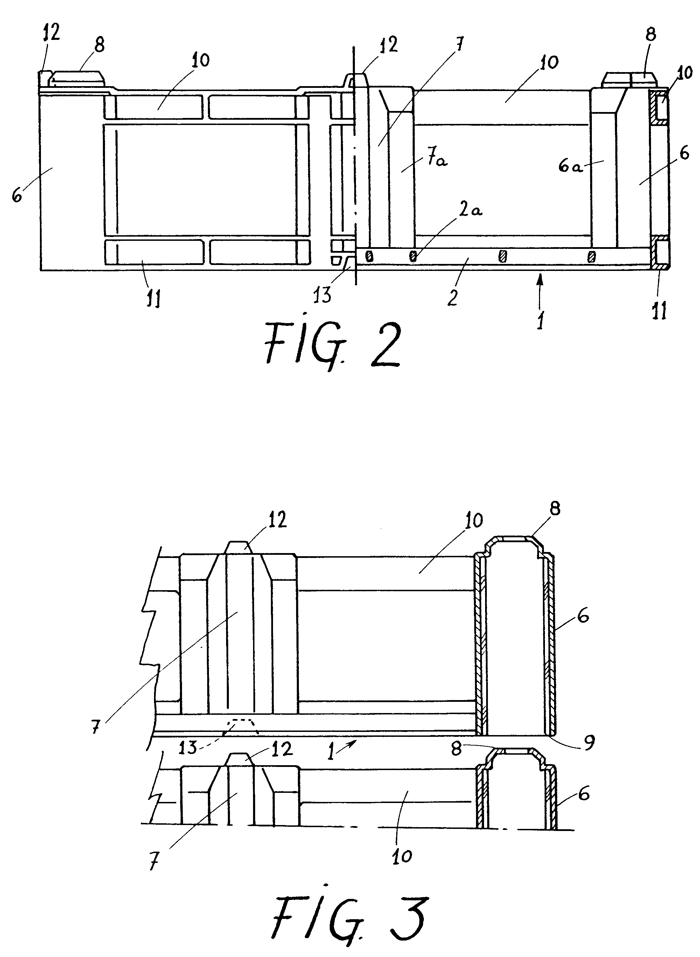

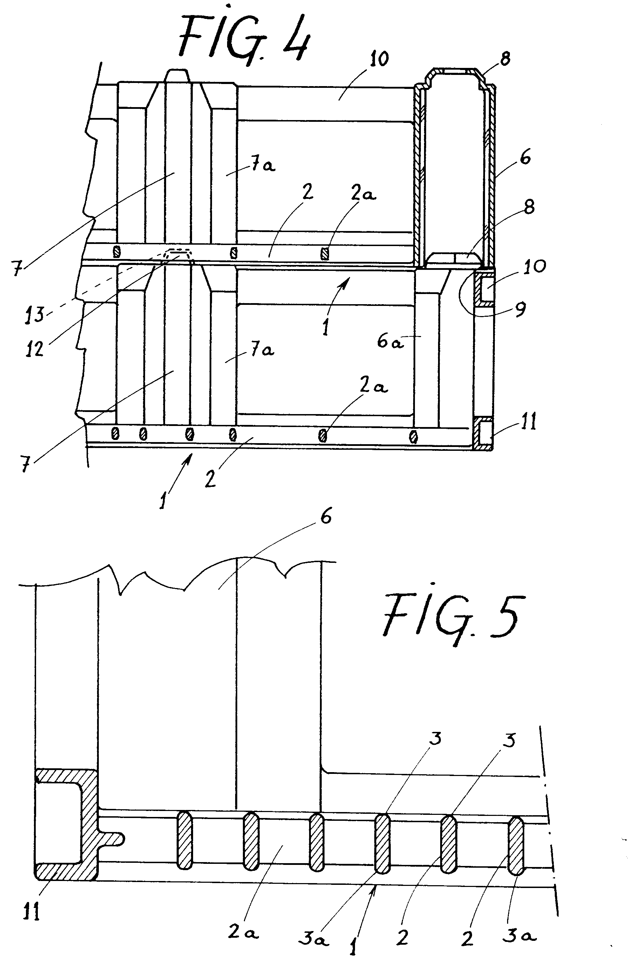

Dans ces dessins, la figure 1 est une vue en plan du bac; la figure 2 est une vue en coupe par le plan II-II de la figure 1; la figure 3 est un détail en élévation, partiellement coupé, de deux bacs écartés; la figure 4 est une vue similaire de celle de la figure 3, mais avec les bacs emboîtés; et la figure 5 est un détail en coupe par le plan V-V de la figure 1.

Le bac objet de l'invention comprend un fond de référence générale 1, formé par une pluralité de barreaux 2 parallèles, croisés par d'autres barreaux similaires 2a. Les barreaux 2 sont plus hauts que les barreaux 2a et présentent les surfaces supérieure et inférieure, formées par des bords arrondis 3 et 3a identiques, situés, respectivement, sur un même plan supérieur et inférieur, qui correspondent aux faces externe et interne du fond 1 (figure 5).

Des tours intermédiaires 5, des tours 6 situées dans les coins du bac, et des tours 7 situées près des côtés du bac s'avancent au-dessus de la face supérieure du fond 1. Toutes les tours décrites sont vides et de forme à peu près prismatique, avec leurs bases différentes en fonction de la position qu'elles occupent dans le bac. Ces tours sont écartées par des espaces de considérable étendue par rapport aux dimensions du bac.

Les tours 5 et 6 présentent des saillies 8 sur leur base supérieure et des cavités 9 sur la base inférieure complémentaires, pour leur emboîtement lorsque les bacs sont superposés.

Les tours 6 et 7 situées dans le périmètre du bac sont rattachées par une frette 10 à section transversale sous forme de "C" avec ses ailes droites. A son tour, le fond 1 du bac est pourvu d'un cadre 11 à section similaire de celle de la frette 9.

Au milieu des quatre côtés de la frette 10 il y a des saillies 12. En même temps, dans une position correspondant aux saillies 12, le cadre 11 présente des cavités 13 complémentaires par rapport aux saillies 12 pour leur accouplement lorsque les bacs sont emboîtés.

Tel qu'il découle de tout ce qui est décrit et de l'observation des dessins, les tours prismatiques 5, 6 et 7 définissent des espaces 14 à l'intérieur du bac destinés à contenir les fromages 15 (figure 1), qui sont immobilisés par les faces inclinées 5a, 6a et 7a de ces tours.

Grâce aux tours, entre les fromages 15 il y a des espaces considérables qui faciliten l'aération et visualisation de ceux-ci.

Un autre aspect important 0 ressortir est la configuration plane, libre d'irregularités et saillies, tant sur la face interne que sur l'externe du fond 1, grâce aux bords arrondis 3 et 3a des barreaux 2. Par suite de la forme plane des faces du fond du bac, les fromages 15 restent parfaitement appuyés sur n'importe quelle des deux faces du fond, soit l'interne correspondant au bac qui les contient, soit l'externe correspondant à un bac emboîté sur celui-là.

La présence des jeux de saillies 12 et enfoncements complémentaires 13 lorsque les bacs sont emboîtés procure un alignement et centrage parfaits, écartant ainsi les tolérances qui puissent présenter les saillies 8 et les cavités 9 des tours, dont l'accouplement ne garantit pas, à lui seul, la position corrrecte entre les tours 5, 6 et 7.

La frette 10 garantit la rigidité du bac, malgré les grands espaces de ventilation qu'il y a entre les tours 5, 6 et 7.

**Revendications**

1. Bac pour le séchage et maturation de fromages et produits similaires, du type comprenant un corps moulé d'une seule pièce, <u>caractérisé</u> en ce que le fond (1) est formé par une pluralité de barreaux (2) parallèles, dont les surfaces supérieure (3) et inférieure (3a) sont arrondies, et définissent les faces supérieure et inférieure du fond (1) du bac, disposées selon deux plans parallèles, tandis qu'une pluralité de prolongations verticales en manière de tour (5,6,7), occupant des positions intermédiaires et périmétraux par rapport à ce fond (1), s'avancent au-dessus de la face supérieure du fond, les sections transversaux de ces tours étant différentes en fonction de la situation des tours dans le fond (1), les tours étant écartées par des larges espaces de ventilation, le bac étant complété par une frette (10) qui rattache les extrémités supérieures des tours (6,7) occupant la position périmétrale.

2. Bac selon la revendication 1, caractérisé en ce que les extrémités supérieures d'au moins quelques tours (5,6) sont pourvues de saillies (8), et les extrémités inférieures, de cavités (9) complémentaires aux saillies (8).

3. Bac selon la revendication 1, caractérisé en ce que les tours (5,6,7) présentent des faces latéraux planes (5a,6a,7a), qui leur donnent une configuration en manière d'un prisme.

4. Bac selon la revendication 1, caractérisé en ce que la frette (10) est pourvue de saillies (12), et le périmètre de la face inférieure du fond (1), d'enfoncements (13) complémentaires aux saillies (12).

FIG. 1

FIG. 2

FIG. 3

FIG. 4

FIG. 5

Office européen
des brevets

**RAPPORT DE RECHERCHE EUROPEENNE**

Numero de la demande

EP    91 50 0084

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-U-8 308 493 (ZANUSSI COMPONENTI PLASTICA S.P.A.)<br>* page 2, ligne 13 - page 3, ligne 11 *<br>* figure 1 * | 1 | A01J25/16 |
| Y | --- | 2 | |
| Y | EP-A-0 109 995 (A. MINO-GAILLARD S.A. ET AL.)<br>* page 2, ligne 29 - page 3, ligne 26 *<br>* figures 2,4 * | 2 | |
| A | --- <br>FR-A-2 197 506 (ETABLISSEMENTS GUILBERT)<br>* page 5, ligne 32 - page 7, ligne 23 *<br>* figures 4-6 * | 1 | |
| A | --- <br>FR-A-2 061 879 (ENTREMONT-MARCILLAT S.A.) | | |
| | ----- | | |

|  |
|---|
| **DOMAINES TECHNIQUES RECHERCHES (Int. Cl.5 )** |
| A01J |

Le présent rapport a été établi pour toutes les revendications

| Lieu de la recherche | Date d'achèvement de la recherche | Examinateur |
|---|---|---|
| LA HAYE | 07 NOVEMBRE 1991 | MARANGONI G. |

EPO FORM 1503 03.82 (P0402)